# EUROPÄISCHE PATENTANMELDUNG

(11) **EP 4 841 306 A2**
(43) Veröffentlichungstag der Anmeldung: **18.11.2026**
(21) Anmeldenummer: 26167641.5
(22) Anmeldetag: 25.03.2026
(51) Int. Cl.: G01S 17/04

(54) **OPTOELEKTRONISCHE VORRICHTUNG ZUR ERFASSUNG EINES OBJEKTS IN EINEM ÜBERWACHUNGSBEREICH**

(30) Priorität: 16.05.2025 DE 102025119044
(71) Anmelder: SICK AG, 79183 Waldkirch (DE)
(72) Erfinder: Zwölfer, Ulrich, 79183 Waldkirch (DE)
(74) Vertreter: Manitz Finsterwald Patent- und Rechtsanwaltspartnerschaft mbB

(57) **Zusammenfassung**

Die Erfindung bezieht sich auf eine optoelektronische Vorrichtung zur Erfassung eines Objekts in einem Überwachungsbereich, insbesondere auf einem Förderband, mit: einem Lichtsender zum Aussenden eines Lichtsignals, einem Lichtempfänger zum Empfangen von Empfangslicht aus dem Überwachungsbereich mit einer Vielzahl von Photodiodenelementen zur Erzeugung jeweiliger Empfangssignale, und einer Steuer- und Auswerteeinheit, die dafür ausgebildet ist, zumindest einen Teil der Photodiodenelemente selektiv in einem ereignisbasierten Modus oder in einem Distanzmessmodus zu betreiben.

## Beschreibung

Die Erfindung bezieht sich auf eine Optoelektronische Vorrichtung und ein Verfahren zur Erfassung eines Objekts in einem Überwachungsbereich.

Die Erfassung von Objekten mittels optoelektronischer Sensoren spielt in zahlreichen technischen Anwendungen, etwa in der industriellen Automatisierung, Robotik oder Verkehrstechnik, eine zentrale Rolle. Besonders relevant ist dabei die gleichzeitige Gewinnung unterschiedlicher Informationen über ein Objekt, wie dessen Entfernung, Bewegung oder Anwesenheit in einem Erfassungsbereich.

Herkömmliche Systeme greifen zur Realisierung solcher Aufgabenstellungen auf eine Kombination spezialisierter Einheiten zurück, etwa auf entfernungsmessende Komponenten, Bildsensoren sowie separate Auswerteeinheiten. Diese Systeme sind häufig modular aufgebaut, wobei jede Funktionseinheit eine dedizierte Aufgabe erfüllt und eigene Hardware- und Datenverarbeitungsressourcen benötigt.

Ein derartiger Aufbau führt jedoch zu erhöhtem Platzbedarf, höheren Kosten und gesteigertem Energieverbrauch. Zudem erfordert die Verarbeitung der aus verschiedenen Komponenten gewonnenen Daten hohe Datenraten und entsprechend leistungsfähige Auswerteelektronik, um die für viele Anwendungen geforderten kurzen Ansprechzeiten zu gewährleisten.

Es ist eine Aufgabe der Erfindung eine verbesserte optoelektronische Vorrichtung zur Erfassung eines Objekts in einem Überwachungsbereich sowie ein verbessertes Verfahren zur Erfassung eines Objekts in einem Überwachungsbereich bereitzustellen.

Diese Aufgabe wird durch die Gegenstände der unabhängigen Ansprüche gelöst.

Die Erfindung betrifft eine optoelektronische Vorrichtung zur Erfassung eines Objekts in einem Überwachungsbereich, insbesondere auf einem Förderband, mit:
einem Lichtsender zum Aussenden eines Lichtsignals,
einem Lichtempfänger zum Empfangen von Empfangslicht aus dem Überwachungsbereich mit einer Vielzahl von Photodiodenelementen zur Erzeugung jeweiliger Empfangssignale, und
einer Steuer- und Auswerteeinheit, die dafür ausgebildet ist, zumindest einen Teil der Photodiodenelemente selektiv in einem ereignisbasierten Modus oder in einem Distanzmessmodus zu betreiben.

Der Erfindung liegt der Gedanke zugrunde, dass eine Messung einer Distanz, beispielsweise zu einem Objekt in dem Überwachungsbereich, erst dann relevant wird, wenn ein Objekt in dem überwachten Bereich vorhanden ist. Eine kontinuierliche Messung einer Distanz ist vielmehr mit dem unnötigen Einsatz von Rechenressourcen verbunden. Aus diesem Grund umfasst die erfindungsgemäße Vorrichtung zwei unterschiedliche Modi, in der sie betrieben werden kann. In dem ereignisbasierten Modus kann ein Teil der Photodiodenelemente beispielsweise derart betrieben werden, dass basierend auf den erfassten Empfangssignalen ein vorgegebenes Ereignis detektiert wird. In dem Distanzmessmodus hingegen kann ein, insbesondere derselbe, Teil der Photodiodenelemente derart betrieben werden, dass basierend auf den erfassten Empfangssignalen eine Distanz, insbesondere zu dem Objekt, ermittelt wird.

Anstelle einer kontinuierlichen Distanzmessung erfolgt eine Distanzmessung somit ereignisbasiert. Zusätzlich erfolgt die Distanzmessung mit denselben Lichtempfängerelementen wie die Erfassung des Ereignisses selbst, sodass keine zusätzlichen Komponenten bzw. Hardware notwendig ist. Vielmehr erfolgt die Erfassung eines Ereignisses sowie die Messung der Distanz zu einem Objekt durch die Verwendung eines einzigen Lichtempfangsbauteils. Vorteilhafterweise kann hierdurch die Datenrate und Verlustleistung deutlich verringert werden. Die Distanzmessung ist insbesondere eine TOF-Messung, vorzugsweise eine dTOF-Messung. Wie vorstehend beschrieben, kann zumindest ein Teil der Photodiodenelemente des Lichtempfängers selektiv in einem der jeweiligen Betriebsmodi betrieben werden, während der restliche Teil der Photodiodenelemente beispielsweise einen unveränderlichen Betriebsmodus aufweist. In diesem Fall kann der zumindest eine Teil der Photodiodenelemente, insbesondere nur, einen zugehörigen Teil des durch den Lichtempfänger erfassten Überwachungsbereichs abdecken. Grundsätzlich kann die Steuer- und Auswerteeinheit aber auch ausgebildet sein, sämtliche Photodiodenelemente des Lichtempfängers selektiv in einem der jeweiligen Betriebsmodi zu betreiben.

Der Lichtsender der optoelektronischen Vorrichtung kann insbesondere als Laserdiode, Leuchtdiode (LED) oder als Vertical-Cavity Surface-Emitting Laser (VCSEL) ausgebildet sein. Der Lichtsender kann kontinuierliches oder gepulstes Licht abstrahlen, wobei insbesondere infrarote Wellenlängen bevorzugt sein können, beispielsweise im Bereich zwischen 800 nm und 1.600 nm.

Der Lichtempfänger kann ferner als Bildsensor ausgebildet sein, beispielsweise als CMOS-Sensor oder als arraybasierter SPAD-Sensor.

Die Steuer- und Auswerteeinheit kann eine elektronische Schaltung oder eine Recheneinheit umfassen, beispielsweise in Form eines Mikrocontrollers, eines digitalen Signalprozessors (DSP), eines FPGAs oder eines ASICs. Die Steuer- und Auswerteeinheit kann ausgebildet sein, um den Lichtsender und/oder den Lichtempfänger zu steuern, empfangene Signale zu verarbeiten, Zeitmessungen durchzuführen oder Distanz- oder Bewegungsinformationen aus den empfangenen Lichtsignalen zu berechnen.

Die optoelektronische Vorrichtung kann insbesondere dazu eingesetzt werden, als Teil eines Förderbandsystems die Anwesenheit eines Förderobjekts auf einem Förderband zu erfassen und eine Distanz zu diesen Förderobjekten zu ermitteln.

Weitere Ausführungsformen der Erfindung sind der Beschreibung, den Unteransprüchen und den Zeichnungen zu entnehmen.

Gemäß einer ersten Ausführungsform ist die Steuer- und Auswerteeinheit ausgebildet, den Betriebsmodus der Photodiodenelemente basierend auf einem Triggerereignis zu wechseln, insbesondere wobei ein Grundmodus der Photodiodenelemente der ereignisbasierte Modus ist. Mit anderen Worten wird die optoelektronische Vorrichtung in einem Grundmodus bzw. Grundzustand, d.h. in einem Zustand, in dem kein Objekt in dem Überwachungsbereich detektiert wurde, in dem ereignisbasierten Modus betrieben. Ein Triggerereignis kann abhängig von dem Betriebsmodus der optoelektronischen Vorrichtung bzw. der Photodiodenelemente sein, d.h. im ereignisbasierten Modus können vorgegebene Triggerereignisse definiert sein und im Distanzmessmodus können sich davon zumindest teilweise unterscheidende vorgegebene Triggerereignisse definiert sein. Ein Triggerereignis kann beispielsweise eine, insbesondere initiale, Detektion eines Objekts in dem Überwachungsbereich oder in einem Teil des Überwachungsbereichs umfassen, insbesondere wenn die optoelektronische Vorrichtung im ereignisbasierten Modus betrieben wird. Ein Triggerereignis kann ferner ein Nichtdetektieren bzw. eine Abwesenheit eines Objekts in dem Überwachungsbereich oder in einem Teil des Überwachungsbereichs umfassen, insbesondere wenn die optoelektronische Vorrichtung im Distanzmessmodus betrieben wird. Ein Triggerereignis kann insbesondere die Detektion einer Anfangs- und/oder Endkante eines Objekts umfassen. Die Steuer- und Auswerteeinheit kann insbesondere ausgebildet sein, basierend auf den erzeugten Empfangssignalen das Vorliegen eines Triggerereignisses festzustellen.

Gemäß einer Ausführungsform ist die Steuer- und Auswerteeinheit ausgebildet, nach einem Wechsel in den Distanzmessmodus die Photodiodenelemente für eine vorgegebene Zeitspanne in dem Distanzmessmodus zu betreiben und nach Ablauf der vorgegebenen Zeitspanne den Betriebsmodus der Photodiodenelemente zurück in den ereignisbasierten Modus zu wechseln. Wie bereits vorstehend beschrieben, ist der Grundzustand der Vorrichtung vorzugsweise der ereignisbasierte Modus. In vielen Anwendungsfällen ist es somit vorteilhaft, wenn die optoelektronische Vorrichtung nach einer vorgegebenen Zeitspanne wieder in den ereignisbasierten Modus zurückkehrt, um die Detektion von "neuen" Objekten sicherzustellen, um ein Ende bzw. eine Endkante des Objekts festzustellen und/oder um die Erstreckung des Objekts in Objektstromrichtung zu ermitteln. Zusätzlich oder alternativ kann die Rückkehr in den ereignisbasierten Modus durch ein entsprechendes Triggerereignis erfolgen. Ferner kann nach der vorgegeben Zeitspanne eine Auswertung erfolgen, ob sich ein Objekt weiterhin in dem Überwachungsbereich befindet, wobei die Steuer- und Auswerteeinheit basierend auf der Auswertung den Betriebsmodus der Photodiodenelemente wechselt oder nicht, wobei bei einer positiven Auswertung kein Wechsel des Betriebsmodus in den ereignisbasierten Modus erfolgt und bei einer negativen Feststellung ein Wechsel des Betriebsmodus in den ereignisbasierten Modus erfolgt. Mit anderen Worten kann die Steuer- und Auswerteeinheit ausgebildet sein, nach einer abgeschlossenen Erfassung eines jeweiligen Objekts die Photodiodenelemente in dem ereignisbasierten Modus zu betreiben. Abgeschlossen ist eine Erfassung beispielsweise dann, wenn alle erforderlichen Informationen in Bezug auf das Objekt ermittelt wurden.

Gemäß einer Ausführungsform umfasst das Triggerereignis, dass eine Veränderung einer durch zumindest ein Photodiodenelement erfassten Lichtintensität größer als ein vorgegebener Schwellenwert ist oder dass der Differenzbetrag zwischen durch zwei benachbarte Photodiodenelemente erfasste Lichtintensitäten größer als der vorgegebene Schwellenwert ist. Mit anderen Worten wird anhand einer Lichtintensitätsveränderung, d.h. einer Helligkeitsveränderung, das Vorliegen eines Objekts in dem Überwachungsbereich erfasst.

Im ersten Fall kann beispielsweise die von einem Photodiodenelement erfasste Lichtintensität zum Zeitpunkt t mit der Lichtintensität zum Zeitpunkt t+1 verglichen werden, um eine Veränderung zu identifizieren, die größer als der vorgegebene Schwellenwert ist. Dieser Vergleich kann beispielsweise kontinuierlich während des Betriebs im ereignisbasierten Modus durchgeführt werden. Wenn der Lichtempfänger beispielsweise auf ein Referenzobjekt, z.B. ein statisches Objekt oder ein Objekt mit konstanten Eigenschaften, beispielsweise gleichbleibender Farbe, gleichbleibender Form und/oder gleichbleibender Distanz zum Lichtempfänger, gerichtet ist, so kann eine Veränderung der erfassten Lichtintensität erfolgen, sobald ein anderes bzw. neues Objekt in den Erfassungsbereich des jeweiligen Photodiodenelements oder der Photodiodenelemente gelangt. Ist beispielsweise eine Farbe des neuen Objekts heller als die des Referenzobjekts, so ist die von dem Photodiodenelement erfasste Lichtintensität zum Zeitpunkt t+1, in dem das neue Objekt zum ersten Mal in den Erfassungsbereich des Photodiodenelements gelangt, höher als die von dem Photodiodenelement erfasste Lichtintensität zum Zeitpunkt t. Analog gilt dies in umgekehrter Weise, wenn die Farbe des neuen Objekts dunkler als die des Referenzobjekts ist.

Die vorstehenden Überlegungen können in gleicher Weise auf den zweiten Fall angewendet werden, wobei dann die erfasste Lichtintensität eines ersten Pixels mit der erfassten Lichtintensität eines zweiten benachbarten Pixels verglichen wird. So ist der Lichtempfänger insbesondere vorgesehen zur Erfassung eines in einer Bewegungsrichtung relativ zu der optoelektronischen Vorrichtung bewegten Objektsstroms von Objekten. Beispielsweise können sich die Objekte entlang einer Geraden bewegen, wie es insbesondere bei einem Förderband der Fall ist. Der erste Pixel kann beispielsweise in Objektstromrichtung vor dem zweiten Pixel angeordnet sein, sodass das erste Pixel eine Veränderung der Lichtintensität, z.B. durch ein neues Objekt in dessen Erfassungsbereich, als erstes erfasst. Durch einen Vergleich der erfassten Lichtintensität des ersten Pixels mit der erfassten Lichtintensität des zweiten Pixels, welches weiterhin das Referenzobjekt erfasst, kann somit die Anwesenheit eines neuen Objekts in dem Überwachungsbereich detektiert werden, wobei eine erforderliche Bedingung für die Detektion eines neuen Objekts beispielsweise ist, dass der Differenzbetrag zwischen der erfassten Lichtintensität des ersten Pixels und der erfassten Lichtintensität des zweiten Pixels größer als der vorgegebene Schwellenwert ist. Ein Referenzlichtintensitätswert, d.h. der Lichtintensitätswert, der sich aus der Erfassung des Referenzobjekts ergibt, kann ferner bekannt sein, sodass eine Veränderung auch durch einen Vergleich eines gemessenen Lichtintensitätswerts mit dem Referenzlichtintensitätswert festgestellt werden kann. In einer Ausführungsform ist Steuer- und Auswerteeinheit ausgebildet, eine Art des Triggerereignisses festzustellen, insbesondere festzustellen, ob es sich bei dem Triggerereignis um einen Helligkeitsanstieg oder einen Helligkeitsabfall handelt.

Gemäß einer Ausführungsform ist die Steuer- und Auswerteeinheit ausgebildet, den Betriebsmodus der Photodiodenelemente durch Einstellung einer jeweiligen Vorspannung eines Photodiodenelements einzustellen. Wie bereits beschrieben, können die Photodiodenelemente in unterschiedlichen Betriebsmodi betrieben werden. Die Einstellung der Vorspannung erfolgt vorzugsweise elektrisch über die Steuer- und Auswerteeinheit, sodass eine flexible Anpassung des Betriebsmodus - beispielsweise in Abhängigkeit der Anwendung, Umgebungsbedingungen oder eines externen Steuersignals - ermöglicht wird. Insbesondere kann beispielsweise die Empfindlichkeit oder das Antwortverhalten einzelner Photodiodenelemente gezielt beeinflusst werden. Die Steuer- und Auswerteeinheit kann insbesondere das Vorliegen eines Triggerereignisses feststellen und in Reaktion auf diese Feststellung die Vorspannung einzelner oder aller Photodiodenelemente ein- bzw umstellen, um einen jeweiligen Betriebsmodus einzustellen. Obwohl grundsätzlich das Einstellen der Vorspannung aller Photodiodenelemente aufgrund der einfacheren technischen Umsetzung bevorzugt ist, kann es in manchen Anwendungsfällen auch vorteilhaft sein, nur die Vorspannung einzelner Photodiodenelemente ein- bzw. umzustellen, auch wenn dies mit einer höheren technischen Komplexität verbunden ist.

Gemäß einer Ausführungsform umfasst der ereignisbasierte Modus, dass die Photodiodenelemente in einem linearen PD-Modus bei geringer oder ohne Vorspannung betrieben werden, und wobei der Distanzmessmodus umfasst, dass die Photodiodenelemente in einem SPAD-Modus bei Vorspannung oberhalb einer Durchbruchspannung, insbesondere in einem Geiger-Modus, oder in einem APD-Modus bei Vorspannung unterhalb der Durchbruchspannung bei kontrolliertem Lawinendurchbruch betrieben werden.

In dem linearen PD-Betrieb, bei dem ein proportionaler Zusammenhang zwischen einfallender Lichtintensität und Ausgangsstrom besteht, kann auf einfache Weise und mit ausreichender Ansprechzeit das Vorliegen eines jeweiligen Ereignisses festgestellt werden. Der lineare PD-Modus ist insbesondere dann vorteilhaft, wenn nicht das absolute Helligkeitsniveau, sondern kontinuierliche Änderungen der Lichtintensität detektiert oder einzelne Lichtänderungsereignisse ausgewertet werden sollen. In diesem Modus liefert die Photodiode ein analoges Ausgangssignal, das proportional zur einfallenden Lichtmenge ist, wodurch sich Helligkeitsänderungen präzise abbilden lassen. Das kontinuierliche analoge Ausgangssignal einer im linearen Modus betriebenen Photodiode ermöglicht es, in Kombination mit einer Schwellenwertlogik oder einem Differenzverstärker, derartige Helligkeitssprünge in Echtzeit zu erkennen und als diskrete Ereignisse weiterzuverarbeiten. Gegenüber SPAD- bzw. APD-Modus bietet der lineare Modus hier den Vorteil einer höheren Dynamik und geringeren Komplexität, da keine Avalanche-Zündung erforderlich ist und eine einfachere Signalauswertung ermöglicht wird. Zudem erlaubt der lineare Modus durch seine proportionale Charakteristik eine feinere Abstufung und eine differenziertere Erkennung von Reizmustern.

In dem SPAD-Modus oder APD-Modus hingegen kann durch Anlegen einer erhöhten Sperrspannung eine interne Verstärkung des Photostroms erfolgen. Zur Durchführung einer ToF-Distanzmessung ist beispielsweise eine möglichst präzise und schnelle Detektion von Lichtsignalen erforderlich, insbesondere bei kurzen Pulsdauern und/oder geringer Lichtintensität. Hierzu ist es vorteilhaft, Photodiodenelemente in einem Betriebsmodus zu betreiben, der eine hohe Empfindlichkeit und kurze Ansprechzeiten bietet.

In diesem Zusammenhang bietet insbesondere der Betrieb im Geiger-Modus, wie er bei Single-Photon Avalanche Dioden (SPADs) realisiert wird, Vorteile. SPADs ermöglichen die Detektion einzelner Photonen mit hoher zeitlicher Auflösung, da sie bei Überschreiten einer definierten Sperrspannung in einen Lawinendurchbruch übergehen und dadurch ein digitales Triggersignal mit sehr geringer Jitterzeit erzeugen. Diese Eigenschaft ist besonders geeignet für ToF-Messverfahren, bei denen die präzise Bestimmung der Lichtlaufzeit entscheidend ist. Auch der Betrieb im Avalanche-Modus (APD-Modus) ist vorteilhaft, da hier durch interne Verstärkung des Photostroms bei hoher Sperrspannung eine höhere Signalstärke erzielt werden kann. Dies verbessert das Signal-Rausch-Verhältnis bei gleichzeitig hoher zeitlicher Auflösung, was insbesondere bei schwachen Rücksignalen oder bei größerer Messdistanz von Bedeutung ist. Beide Betriebsmodi - Geiger-Modus für SPADs und Avalanche-Modus für APDs - ermöglichen somit eine zuverlässige und hochauflösende Distanzmessung.

Gemäß einer Ausführungsform ist die Steuer- und Auswerteeinheit ausgebildet, einen ersten Teil der Photodiodenelemente dauerhaft in einem ereignisbasierten Modus zu betreiben und/oder einen zweiten Teil der Photodiodenelemente dauerhaft in einem Distanzmessmodus zu betreiben. Beispielsweise kann der erste Teil der Photodiodenelemente stets dazu verwendet werden, das Ereignis, z.B. das Vorliegen eines Objekts festzustellen. Dauerhaft bedeutet hierbei beispielsweise für eine unbestimmte Zeit bis eine Rekalibrierung z.B. durch einen Nutzer erfolgt. Bei dem ersten Teil der Phototdiodenelemente kann es sich beispielsweise um Photodiodenelemente handeln, die einen Randbereich des Erfassungsbereichs erfassen, insbesondere einen Eintrittsbereich, welcher einem Bereich des Erfassungsbereichs entspricht, in den neue Objekte voraussichtlich zuerst eintreten. Dieser Eintrittsbereich kann beispielsweise aufgrund der Bewegungsrichtung des Objektstroms vorgegeben sein. Somit kann basierend auf dem ersten Teil der Photodiodenelemente frühzeitig ein Objekt in dem Überwachungsbereich detektiert werden. Im einfachsten Fall umfasst der erste Teil der Photodiodenelemente ein einziges Photodiodenelement, wobei der erste Teil der Photodiodenelemente vorzugsweise mehr als ein Photodiodenelement umfasst, insbesondere eine Reihe an Photodiodenelementen oder mehrere benachbarte Reihen an Photodiodenelementen. Gleichzeitig kann mit den in Bewegungsrichtung des Objektstroms nachfolgenden Photodiodenelementen, d.h. dem zweiten Teil der Photodiodenelemente, die Distanzmessung zu dem Objekt erfolgen. Je nach Anwendungsfall und Anforderungen an die Ereignisdetektion und/oder Distanzmessung kann die Anzahl an jeweiligen Photodiodenelementen des ersten Teils und/oder des zweiten Teils selektiv angepasst werden.

Gemäß einer Ausführungsform ist die Steuer- und Auswerteeinheit ausgebildet, in dem Distanzmessmodus eine Ermittlung der Distanz zu dem Objekt mittels eines Lichtlaufzeitverfahrens durchzuführen. Beispielsweise handelt es sich bei dem Lichtlaufzeitverfahren um ein iTOF-Verfahren (indirect Time-of-Flight-Verfahren) oder vorzugsweise ein dTOF-Verfahren (direct Time-of-Flight-Verfahren). Die dTOF-Messung erfolgt beispielsweise mittels bekannter Messmethoden. Dabei kann beispielsweise eine direkte Zeitmessung mittels SPAD-Frontend, einer TDC-Messeinheit und der Auswertung eines entsprechenden Histogramms erfolgen.

Durch geeignete Filter- oder Schwellenwertverfahren können zudem Störeinflüsse wie Hintergrundlicht oder Rauschen reduziert werden.

Gemäß einer Ausführungsform ist die Steuer- und Auswerteeinheit ausgebildet, basierend auf einer in dem Distanzmessmodus ermittelten Distanz zu dem Objekt und vordefinierten Systemparametern eine Höhe des Objekts zu berechnen. In einer beispielhaften Ausführungsform ist die optoelektronische Vorrichtung in einer vordefinierten Höhe über dem Boden positioniert und derart ausgerichtet, dass ihre optische Achse im Wesentlichen senkrecht zur Bodenfläche verläuft. Die optoelektronische Vorrichtung weist somit eine vertikale Ausrichtung auf, wobei ihr Sichtfeld im Wesentlichen nach unten gerichtet ist. Insbesondere kann die Distanz zu einem vorstehend beschriebenen Referenzobjekt, z.B. einem Förderband, und damit die Höhe des Referenzobjekts bekannt sein. Basierend auf der ermittelten Distanz zu dem Objekt, d.h. dem neu erfassten Objekt, kann dann unter Berücksichtigung der Höhe des Referenzobjekts auf die Höhe des Objekts rückgeschlossen werden. Neben der Höhe des Referenzobjekts können weitere Systemparameter wie beispielsweise die Höhe bzw. Position der optoelektronischen Vorrichtung, die Ausrichtung der optoelektronischen Vorrichtung und/oder eine Form des Referenzobjekts verwendet werden.

Gemäß einer Ausführungsform ist die Steuer- und Auswerteeinheit ausgebildet, eine Messreihe von zumindest zwei Zeitpunkten zu erfassen, zu denen von zumindest einem, insbesondere demselben, Photodiodenelement ein jeweiliges Triggerereignis registriert wurde, basierend auf der Messreihe einen Erfassungszeitraum zu ermitteln, in dem das Objekt von dem Photodiodenelement erfasst wurde, und basierend auf dem Erfassungszeitraum und der Geschwindigkeit des Objekts eine Länge des Objekts zu ermitteln. Beispielsweise wird der Zeitpunkt der initialen Erfassung des Objekts durch das Photodiodenelement, d.h. der Zeitpunkt des ersten Triggerereignisses, und der letzte Zeitpunkt, in dem das Objekt von demselben Photodiodenelement erfasst wurde, d.h. der Zeitpunkt des zweiten Triggerereignisses, in der Messreihe festgehalten, sodass basierend auf den erfassten Zeitpunkten der Erfassungszeitraum des Objekts ermittelt werden kann. Das zweite Triggerereignis entspricht insbesondere dem unmittelbar auf das erste Triggerereignis folgenden Triggerereignis. Unter Verwendung der bekannten Geschwindigkeit des Objekts, die bei einem Förderbandsystem z.B. der Förderbandgeschwindigkeit entspricht, kann anschließend auf die Länge des Objekts, d.h. die Ausdehnung in Objektstromrichtung, geschlossen werden. Werden durch dasselbe Objekt mehr als zwei Triggerereignisse ausgelöst, beispielsweise aufgrund von unterschiedlichen Farben des Objekts, kann die Steuer- und Auswerteeinheit ausgebildet sein, festzustellen, ob es sich bei einem Triggerereignis um ein durch die Beschaffenheit des Objekts verursachtes Triggerereignis handelt bzw. ob das Photodiodenelement weiterhin das Objekt erfasst. Ist die Feststellung positiv, so kann die Messreihe fortgesetzt werden und nur der erste und letzte Wert der Messreihe, d.h. die Werte, die dem ersten und letzten auf das Objekt zurückzuführende Triggerereignis zugeordnet sind, für die Bestimmung des Erfassungszeitraums verwendet werden.

Ein weiterer Aspekt der Erfindung bezieht sich auf ein Förderband zum Fördern von Förderobjekten, und eine optoelektronische Vorrichtung zur Erfassung der Förderobjekte gemäß einem der vorstehenden Ausführungsformen.

Ein weiterer Aspekt der Erfindung bezieht sich auf ein Verfahren zur Erfassung eines Objekts in einem Überwachungsbereich, welches umfasst, dass:
von einem Lichtempfänger aus dem Überwachungsbereich mit einer Vielzahl von Photodiodenelementen Empfangslicht empfangen wird, und
basierend auf einem Triggerereignis ein Betriebsmodus zumindest eines Teils der Photodiodenelemente von einem ereignisbasierten Modus in einen Distanzmessmodus gewechselt wird.

Für das Fördersystem sowie das Verfahren gelten die Ausführungen zu der erfindungsgemäßen optoelektronischen Vorrichtung entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1a-1c: schematische Darstellungen einer optoelektronischen Vorrichtung bei der Verwendung in einem Förderbandsystem
- Fig. 2a: ein Schaltbild eines Teils der optoelektronischen Vorrichtung
- Fig. 2b: beispielhafte Strom- und Spannungsverläufe bei der Erfassung eines Objekts mit der optoelektronischen Vorrichtung
- Fig. 2c: Ablaufphasen während des Betriebs der optoelektronischen Vorrichtung
- Fig. 3: Betriebsmodi eines Photodiodenelements anhand einer Strom-Spannungs-Kennlinie

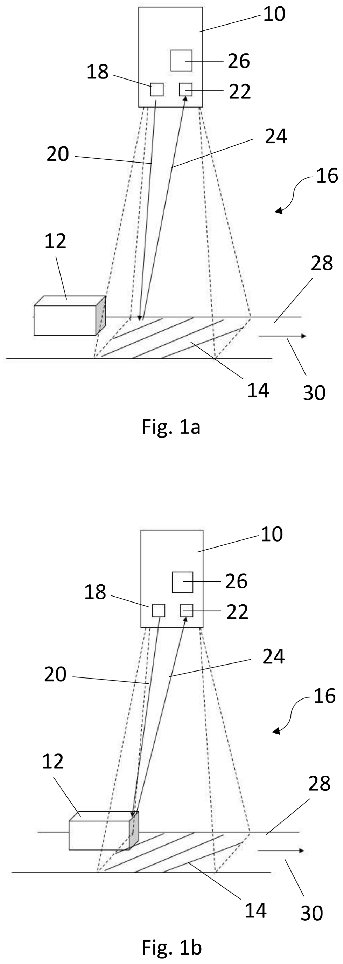

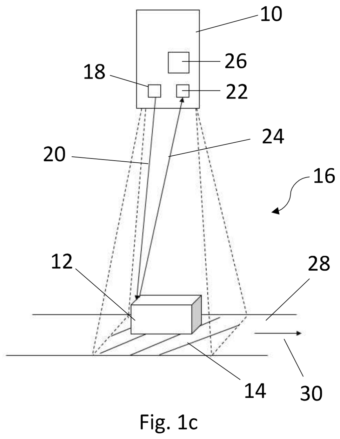

Fig. 1a bis 1c zeigen schematische Darstellungen einer optoelektronischen Vorrichtung 10 zur Erfassung eines Objekts, hier ein Paket 12, in einem Überwachungsbereich 14 bei der Verwendung in einem Förderbandsystem 16. Die optoelektronische Vorrichtung 10 umfasst einen Lichtsender 18 zum Aussenden eines Lichtsignals 20 sowie einen Lichtempfänger 22 zum Empfangen von Empfangslicht 24 aus dem Überwachungsbereich 14 mit einer Vielzahl von Photodiodenelementen 34 zur Erzeugung jeweiliger Empfangssignale. Die optoelektronische Vorrichtung 10 umfasst ferner eine Steuer- und Auswerteeinheit 26, die dafür ausgebildet ist, zumindest einen Teil der Photodiodenelemente 34 selektiv in einem ereignisbasierten Modus oder in einem Distanzmessmodus zu betreiben. Das Paket 12 wird auf einem Förderband 28 transportiert und bewegt sich somit in eine Bewegungsrichtung, auch Objektstromrichtung 30 genannt, relativ zu der optoelektronischen Vorrichtung 10.

Das Objekt kann grundsätzlich jede Art von Fördergut sein, z.B. ein Koffer, ein Paket, ein Behälter, ein Werkstück, ein Lebensmittelprodukt, eine Flasche, eine Blisterverpackung, Recyclingmaterial und/oder Schüttgut.

In einem Grundmodus, welcher in Fig. 1a dargestellt ist, befindet sich die optoelektronische Vorrichtung in dem ereignisbasierten Modus, in dem die Photodiodenelemente 34 ausgebildet sind, ein Triggerereignis, z.B. das Eintreten des Pakets 12 in den Überwachungsbereich 14, zu erfassen. Hierzu stellt die Steuer- und Auswerteeinheit 26 die Photodiodenelemente 34 mit einer sehr geringen oder einer Null-Vorspannung ein, sodass diese in einem linearen PD-Modus betrieben werden. Das Triggerereignis wird dabei insbesondere dadurch erfasst, dass eine Veränderung der durch zumindest ein Photodiodenelement 34 erfassten Lichtintensität größer als ein vorgegebener Schwellenwert ist oder dass der Differenzbetrag zwischen durch zwei benachbarte Photodiodenelemente 34 erfasste Lichtintensitäten größer als der vorgegebene Schwellenwert ist.

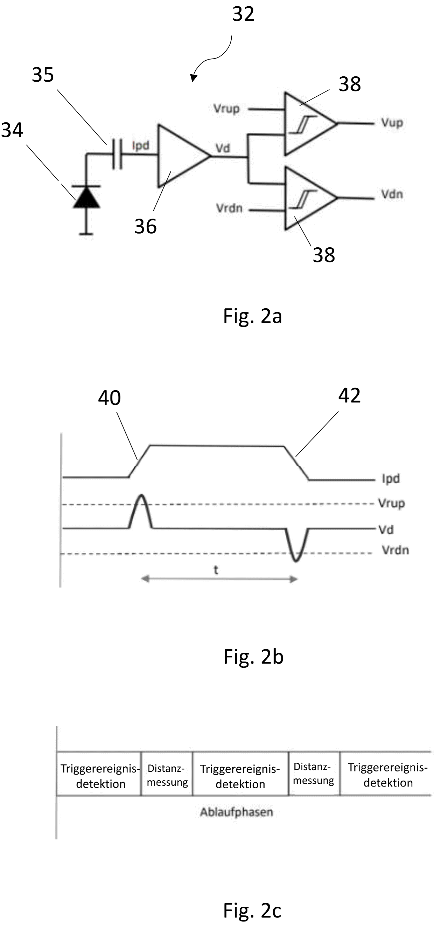

In Fig. 2a ist ein exemplarisches Schaltbild 32 gezeigt, mit dem eine derartige Lichtintensitätsveränderung in dem ereignisbasierten Modus festgestellt werden kann. Das Schaltbild 32 umfasst ein Photodiodenelement 34, das mit einer Kapazität 35 verbunden ist, die ein von dem Photodiodenelement 34 erzeugtes Signal I_{pd} in eine Spannung umwandelt. Die Kapazitätsspannung wird ferner durch einen Verstärker 36 bzw. Ladungsverstärker verstärkt, sodass sich eine verstärkte Spannung V_{d} ergibt. Diese Spannung V_{d} wird zwei Komparatoren zugeführt, welche jeweils unterschiedliche Referenzspannungen Vᵣᵤₚ und V_{rdn} aufweisen. Die Komparatoren erzeugen entsprechende Ausgangssignale Vᵤₚ und V_{dn}, sobald die Spannung V_{d} den jeweiligen vorgegebenen Schwellenwert über- bzw. unterschreitet. Auf diese Weise wird eine Änderung der Lichtintensität detektiert, wobei steigende und fallende Flanken getrennt erfasst werden können. Die Schaltung erlaubt somit eine differentiell sensitive und richtungsabhängige Detektion von Lichtänderungen an einem einzelnen Photodiodenelement 34.

Wenn - wie in Fig. 1b gezeigt - das Paket 12 in den Überwachungsbereich 14 eintritt, führt dies zu einer Veränderung der von zumindest einem Photodiodenelement 34 erfassten Lichtintensität, vorliegend zu einem Lichtintensitätsanstieg 40, sodass ein erstes Triggerereignis detektiert wird. Das Paket 12 kann beispielsweise heller sein als das Förderband 28, sodass der zugehörige Spannungswert V_{d} größer als die Referenzspannung Vᵣᵤₚ sein wird und der jeweilige Komparator 38 das Signal Vᵤₚ ausgibt. Dieser Verlauf ist in Fig. 2b dargestellt. Basierend auf der Detektion des ersten Triggerereignisses wechselt die Steuer- und Auswerteeinheit 26 den Betrieb der Photodiodenelemente 34 in einen Distanzmessmodus, bei dem die Photodiodenelemente 34 in einem SPAD-Modus bei Vorspannung oberhalb einer Durchbruchspannung, insbesondere in einem Geiger-Modus, betrieben werden. In dem Distanzmessmodus erfolgt eine dTOF-Lichtlaufzeitmessung, auf welcher basierend eine Höhe des Pakets 12, d.h. die Ausdehnung des Pakets 12 in Richtung einer optischen Achse der Vorrichtung 10, bestimmt wird. Die Distanz der optoelektronischen Vorrichtung 10 zu dem Förderband 28 ist bekannt, sodass basierend auf der ermittelten Distanz zu dem Paket 12 die Höhe des Pakets 12 ermittelt werden kann. Die Steuer- und Auswerteeinheit 26 ist dabei ausgebildet, die Photodiodenelemente 34 nur für eine vorgegebene Zeitdauer in dem Distanzmessmodus zu betreiben und nach Ablauf der vorgegebenen Zeitdauer zurück in den ereignisbasieren Modus zu wechseln, um sicherzustellen, dass nach einer erfolgreichen Distanzmessung weitere Triggerereignisse, wie beispielsweise die Detektion eines Endes des Pakets 12, festgestellt werden. Die Steuer- und Auswerteeinheit 26 kann beispielsweise nach der Detektion des ersten Triggerereignisses das zweite Triggerereignis als Detektion eines Endes des Pakets 12 interpretieren, da ein Objekt bzw. Paket 12 in der Regel genau zwei Triggerereignisse auslöst. Die Steuer- und Auswerteeinheit 26 kann jedoch auch ausgebildet sein, nach einem ersten Triggerereignis, welches vorliegend eine Lichtintensitätssteigerung angibt, das Ende des Pakets 12 erst dann festzustellen, wenn ein darauffolgendes Triggerereignis ein gegensätzliches Triggerereignis darstellt, d.h. in diesem Fall einen Lichtintensitätsabfall 42, welcher in Fig. 2b dargestellt ist. Unter Verwendung der bekannten Geschwindigkeit des Förderbands 28 und der Zeit t die zwischen den beiden Triggerereignissen vergangen ist, kann anschließend auf die Länge des Pakets 12, d.h. die Ausdehnung in Objektstromrichtung 30, geschlossen werden. Anschließend kann die optoelektronische Vorrichtung 10 in den Distanzmessmodus wechseln, um festzustellen, ob es sich bei der anschließend ermittelten Distanz um die bekannte Referenzdistanz zu dem Förderband 28 handelt, wobei bei einer positiven Feststellung unmittelbar zurück in den Grundmodus, d.h. dem ereignisbasierten Modus gewechselt wird, um ein nächstes Triggerereignis, z.B. den Eintritt eines neuen Pakets 12 in den Überwachungsbereich, zu detektieren. Alternativ kann die Steuer- und Auswerteeinheit 26 ausgebildet sein, nach der Ermittlung, dass es sich bei einem Triggerereignis um ein Ende bzw. eine Endkante des Pakets 12 handelt, die Photodiodenelemente 34 weiterhin in dem ereignisbasierten Modus zu betreiben, um ein nächstes Triggerereignis zu detektieren.

Fig. 2c stellt beispielhaft die zuvor beschriebenen Ablaufphasen während des Betriebs der optoelektronischen Vorrichtung 10 dar.

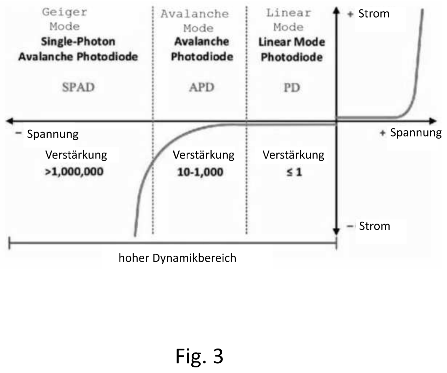

Fig. 3 veranschaulicht die Betriebsmodi eines Photodiodenelements 34 anhand einer Strom-Spannungs-Kennlinie.

Die in Fig. 3 dargestellte schematische Kennlinie zeigt das typische Strom-Spannungs-Verhalten eines Photodiodenelements 34 in Abhängigkeit vom Betriebsmodus bzw. der Vorspannung. Entlang der horizontalen Achse ist die angelegte Vorspannung aufgetragen, während die vertikale Achse den resultierenden Strom wiedergibt. Die Darstellung veranschaulicht insbesondere den erreichbaren Verstärkungsfaktor und den jeweiligen Dynamikbereich des Photodiodenelements 34.

Im rechten Bereich der Darstellung ist der sogenannte lineare Modus (PD) abgebildet, bei dem ein Photodiodenelement 34 bei relativ geringer Vorspannung oder einer Null-Vorspannung betrieben wird. In diesem Bereich ist der Photostrom proportional zur einfallenden Lichtintensität; der Verstärkungsfaktor beträgt hierbei höchstens Eins. Dieser Modus eignet sich besonders für Anwendungen mit kontinuierlicher Lichtintensitätsmessung.

Der mittlere Bereich zeigt den Avalanche-Modus (APD), in dem das Photodiodenelement 34 mit erhöhter Sperrspannung betrieben wird. Durch stoßionisationsbedingte Verstärkung entsteht ein erhöhter Photostrom, wobei Verstärkungsfaktoren typischerweise im Bereich von 10 bis 1.000 liegen. Der APD-Modus bietet somit eine höhere Empfindlichkeit als der lineare Modus.

Im linken Bereich ist der sogenannte Geiger-Modus (SPAD-Modus) dargestellt. Hierbei handelt es sich um den Betrieb des Photodiodenelements 34 oberhalb der Durchbruchspannung. Der in diesem Modus auftretende Verstärkungsfaktor liegt typischerweise bei über einer Million. Das Photodiodenelement 34 arbeitet als Einzelphotonendetektor, wobei jeder detektierte Photoneneinfall eine lawinenartige Stromantwort auslöst.

### Bezugszeichenliste

- 10: optoelektronische Vorrichtung
- 12: Paket
- 14: Überwachungsbereich
- 16: Förderbandsystem
- 18: Lichtsender
- 20: Lichtsignal
- 22: Lichtempfänger
- 24: Empfangslicht
- 26: Steuer- und Auswerteeinheit
- 28: Förderband
- 30: Objektstromrichtung
- 32: Schaltbild
- 34: Photodiodenelement
- 36: Verstärker
- 38: Komparatoren
- 40: Lichtintensitätsanstieg
- 42: Lichtintensitätsabfall

## Patentansprüche

1. Optoelektronische Vorrichtung (10) zur Erfassung eines Objekts in einem Überwachungsbereich (14), insbesondere auf einem Förderband (28), mit:
einem Lichtsender (18) zum Aussenden eines Lichtsignals (20),
einem Lichtempfänger (22) zum Empfangen von Empfangslicht (24) aus dem Überwachungsbereich (14) mit einer Vielzahl von Photodiodenelementen (34) zur Erzeugung jeweiliger Empfangssignale, und
einer Steuer- und Auswerteeinheit (26), die dafür ausgebildet ist, zumindest einen Teil der Photodiodenelemente (34) selektiv in einem ereignisbasierten Modus oder in einem Distanzmessmodus zu betreiben.

2. Optoelektronische Vorrichtung (10) nach Anspruch 1,
wobei die Steuer- und Auswerteeinheit (26) ausgebildet ist, den Betriebsmodus der Photodiodenelemente (34) basierend auf einem Triggerereignis zu wechseln, insbesondere wobei ein Grundmodus der Photodiodenelemente (34) der ereignisbasierte Modus ist.

3. Optoelektronische Vorrichtung (10) nach Anspruch 2,
wobei die Steuer- und Auswerteeinheit (26) ausgebildet ist, nach einem Wechsel in den Distanzmessmodus die Photodiodenelemente (34) für eine vorgegebene Zeitspanne in dem Distanzmessmodus zu betreiben und nach Ablauf der vorgegebenen Zeitspanne den Betriebsmodus der Photodiodenelemente (34) zurück in den ereignisbasierten Modus zu wechseln.

4. Optoelektronische Vorrichtung (10) nach Anspruch 2 oder 3,
wobei das Triggerereignis umfasst:
dass eine Veränderung der durch zumindest ein Photodiodenelement (34) erfassten Lichtintensität größer als ein vorgegebener Schwellenwert ist oder dass der Differenzbetrag zwischen durch zwei benachbarte Photodiodenelemente (34) erfasste Lichtintensitäten größer als der vorgegebene Schwellenwert ist.

5. Optoelektronische Vorrichtung (10) nach einem der vorstehenden Ansprüche,
wobei die Steuer- und Auswerteeinheit (26) ausgebildet ist, den Betriebsmodus der Photodiodenelemente (34) durch Einstellung einer jeweiligen Vorspannung eines Photodiodenelements (34) einzustellen.

6. Optoelektronische Vorrichtung (10) nach einem der vorstehenden Ansprüche,
wobei der ereignisbasierte Modus umfasst, dass die Photodiodenelemente (34) in einem linearen PD-Modus bei geringer oder ohne Vorspannung betrieben werden, und
wobei der Distanzmessmodus umfasst, dass die Photodiodenelemente (34) in einem SPAD-Modus bei Vorspannung oberhalb einer Durchbruchspannung oder in einem APD-Modus bei Vorspannung unterhalb der Durchbruchspannung bei kontrolliertem Lawinendurchbruch betrieben werden.

7. Optoelektronische Vorrichtung (10) nach einem der vorstehenden Ansprüche,
wobei die Steuer- und Auswerteeinheit (26) ausgebildet ist, einen ersten Teil der Photodiodenelemente (34) dauerhaft in einem ereignisbasierten Modus zu betreiben und/oder einen zweiten Teil der Photodiodenelemente (34) dauerhaft in einem Distanzmessmodus zu betreiben.

8. Optoelektronische Vorrichtung (10) nach einem der vorstehenden Ansprüche,
wobei die Steuer- und Auswerteeinheit (26) ausgebildet ist, in dem Distanzmessmodus eine Ermittlung der Distanz zu dem Objekt mittels eines Lichtlaufzeitverfahrens durchzuführen.

9. Optoelektronische Vorrichtung (10) nach Anspruch 8,
wobei die Steuer- und Auswerteeinheit (26) ausgebildet ist, basierend auf der ermittelten Distanz und vordefinierten Systemparametern eine Höhe des Objekts zu berechnen.

10. Optoelektronische Vorrichtung (10) nach einem der vorstehenden Ansprüche,
wobei die Steuer- und Auswerteeinheit (26) ausgebildet ist, eine Messreihe von zumindest zwei Zeitpunkten zu erfassen, zu denen von zumindest einem, insbesondere demselben, Photodiodenelement (34) ein jeweiliges Triggerereignis registriert wurde, basierend auf der Messreihe einen Erfassungszeitraum zu ermitteln, in dem das Objekt von dem Photodiodenelement (34) erfasst wurde,
und basierend auf dem Erfassungszeitraum und der Geschwindigkeit des Objekts eine Länge des Objekts zu ermitteln.

11. Förderbandsystem (28), umfassend:
ein Förderband (28) zum Fördern von Förderobjekten, und
eine optoelektronische Vorrichtung zur Erfassung der Förderobjekte gemäß einem der Ansprüche 1 bis 10.

12. Verfahren zur Erfassung eines Objekts in einem Überwachungsbereich (14), welches umfasst, dass:
von einem Lichtempfänger (22) aus dem Überwachungsbereich (14) mit einer Vielzahl von Photodiodenelementen (34) Empfangslicht (24) empfangen wird, und
basierend auf einem Triggerereignis ein Betriebsmodus zumindest eines Teils der Photodiodenelemente (34) von einem ereignisbasierten Modus in ein Distanzmessmodus gewechselt wird.
